# FASCICULE DE BREVET EUROPEEN

(11) **EP 0 808 080 B1**
(45) Date de publication et mention de la délivrance du brevet: **26.01.2005**
(21) Numéro de dépôt: 97400960.7
(22) Date de dépôt: 29.04.1997
(51) Int. Cl.: H05B 6/12, H05B 11/00

(54) **Foyer de cuisson par induction à rendement élevé**
Hocheffiziente Induktionskochstelle
High efficiency induction cooking hob

(30) Priorité: 14.05.1996 FR 9605978
(43) Date de publication de la demande: 19.11.1997
(73) Titulaire: Brandt Industries, 92500 Rueil Malmaison (FR)
(72) Inventeur: Cornec, René, c/o Thomson-CSF S.C.P.I., 94117 Arcueil cedex (FR); Gaspard, Jean-Yves, Thomson CSF S.C.P.I., 94117 Arcueil cedex (FR); Burais, Noel, Thomson CSF S.C.P.I., 94117 Arcueil cedex (FR)
(74) Mandataire: Santarelli

(56) Documents cités:
- EP-A- 0 277 075
- EP-A- 0 706 303
- FR-A- 2 668 019

## Description

La présente invention concerne les appareils de cuisson par induction.

La cuisson par induction consiste à placer la substance à cuire dans un récipient ferromagnétique chauffé par une circulation de courants dans ses parois provoquée par un champ électromagnétique haute fréquence de quelques kHz à quelques centaines de kHz. Le champ électromagnétique haute fréquence est engendré par un bobinage inducteur plat qui est disposé sur un support placé en dessous d'une plaque vitrocéramique sur laquelle est posé le récipient à chauffer et qui est excité par un courant électrique alternatif haute fréquence fourni par un onduleur.

D'une façon habituelle, le bobinage inducteur est constitué d'une galette réalisée à partir d'un enroulement à plat et en spirale d'un toron multibrin de fils de cuivre qui sont isolés les uns des autres par un verni électriquement isolant pour optimiser le passage du courant haute fréquence (limitation de l'effet de peau) et minimiser les pertes par échauffement.

Le verni isolant d'un tel bobinage ne résiste pas, d'une façon générale, à des températures de plus de 220°C, ni d'ailleurs le matériau de son support qui est, souvent, un plastique moulé. Cela oblige à prévoir un refroidissement du bobinage inducteur au travers de son support au moyen d'une ventilation forcée de la face inférieure du foyer et également une isolation thermique du bobinage inducteur vis à vis du récipient constituant sa charge.

La ventilation forcée renchérit le coût d'un foyer de cuisson par induction tandis que l'isolement thermique vis à vis de la charge nécessite d'éloigner la bobine inducteur de la plaque vitrocéramique supportant le récipient ce qui augmente l'entrefer, diminue le couplage entre la bobine inducteur et le récipient, et augmente le taux des perturbations rayonnées.

En plus du refroidissement, il est parfois nécessaire dans certains types de cuisson, de protéger le bobinage inducteur contre des surchauffes en diminuant le courant délivré par l'onduleur.

On connaît ainsi un plan de cuisson électrique à chauffage à induction tel que décrit dans le document EP 0 277 075 dont l'inducteur est constitué d'un enroulement d'un toron de fils de cuivre isolés par un émail, adapté à supporter des températures de l'ordre de 250° C.

On a également proposé de réaliser des bobinages inducteur monoconducteur soit à partir d'un fil de cuivre rigide à section circulaire de 1 à 1,3 mm de diamètre, disposé dans une rainure hélicoïdale creusée à la surface d'un support plat électriquement isolant, soit à partir d'une bande de cuivre enroulée de chant, donc verticale, en hélice, entre deux plaques de mica, cette disposition autorisant une variation du pas du bobinage du centre à la périphérie, cela afin d'homogénéiser la distribution de température dans le fond du récipient.

Ces bobinages inducteur présentent avec leurs supports une épaisseur relativement importante, ce qui est un handicap pour la compacité des appareils notamment pour le marché de la cuisson domestique.

La présente invention a pour but de remédier à ces inconvénients en renonçant à limiter les pertes du bobinage inducteur, en le laissant au contraire chauffer et en le refroidissant par la charge. Pour cela, le bobinage inducteur doit pouvoir atteindre des températures élevées de l'ordre de 400°C maximum. Il est alors hors de question de tenter une isolation électrique des brins du toron entre eux car les vernis isolants résistant à ces températures sont extrêmement coûteux. C'est pourquoi l'on adopte un bobinage inducteur monoconducteur.

Elle a pour objet un foyer de cuisson par induction comportant une plaque supérieure en un matériau céramique destiné à recevoir un récipient à chauffer en matériau ferritique, un bobinage inducteur monoconducteur disposé sous la plaque supérieure sur un support de bobinage et excité par un générateur de courant haute fréquence, remarquable en ce que le bobinage inducteur monoconducteur est constitué d'un ruban conducteur plat, enroulé à plat en spirale, séparé de la plaque supérieure par une feuille thermiquement conductrice constituée d'un isolant électrique résistant à la chaleur et séparé de son support par une deuxième feuille constituée d'un isolant électrique résistant à la chaleur.

Le ruban conducteur plat du bobinage inducteur peut être en cuivre avec une section correspondant à une densité de courant de l'ordre de 30 A/mm2. Il peut aussi être en aluminium.

Le bobinage inducteur peut être réalisé en enroulant, à plat, en spirale, un ruban conducteur plat. Il peut aussi être réalisé en découpant par un procédé mécanique ou chimique un conducteur plat en spirale dans une tôle de matériau amagnétique et conducteur de l'électricité comme le cuivre ou l'aluminium, en enduisant ce ruban conducteur découpé d'une pâte électriquement isolante, résistant à le chaleur, afin de boucher les interspires, en pressant le ruban conducteur découpé ainsi enduit entre deux feuilles d'isolant électrique pour constituer un sandwich et en cuisant le stratifié obtenu pour former un ensemble compact aisément manipulable.

Le bobinage peut être simplement posé sur le support inférieur thermiquement isolant, sans aucune liaison fixe. Ceci permet d'utiliser pour le support et l'isolation électrique de la plaque supérieure, des matériaux dont les coefficients de dilatation thermique sont différents de celui de la spirale, la spirale étant libre d'évoluer en température.

Le bobinage peut également être isolé de son support par une deuxième feuille d'isolant électrique plus épaisse que celle intercalée sous la plaque supérieure pour s'opposer à la conduction thermique du bobinage vers le support.

Selon une autre caractéristique de l'invention, le bobinage inducteur est constitué d'une combinaison série, parallèle ou série-parallèle de plusieurs bobines plates de longueurs unitaires réduites, réparties à la surface du foyer.

Les feuilles d'isolant électrique haute température sont avantageusement des feuilles de mica, mince dans le cas de la feuille intercalée sous la plaque supérieure et épaisse dans le cas de la feuille intercalée sur le support.

Le support de bobinage thermiquement isolant est avantageusement réalisé en fibres de verre.

Avec ce type de bobinage à conducteur plat, enroulé à plat en spirale, il est possible d'obtenir une galette dont l'épaisseur ne dépasse pas 0,5 mm ce qui suffit au passage des courants haute fréquence qui, de toutes façons, ne pénètrent pas, à la fréquence normale d'utilisation de 25 kHz, de plus de 0,5 mm dans l'épaisseur du conducteur en raison de l'effet de peau et de la proximité du récipient. Comme la largeur de la galette du bobinage est conditionnée par la taille du récipient à chauffer et le nombre de tours du bobinage par l'impédance à ramener en charge sur le générateur haute fréquence, une épaisseur de 0,5 mm conduit à une section de l'ordre du mm² ce qui explique le niveau de pertes élevé du bobinage à puissance maximale et donc sa température de fonctionnement. Cependant la forme du bobinage privilégie le contact avec la charge et donc le refroidissement. Il est à noter que l'épaisseur de la spire peut être tout autre en fonction de la puissance du générateur, de la fréquence d'utilisation et du matériau conducteur utilisé. De même, la largeur est adaptée à la puissance et surtout au type de générateur utilisé.

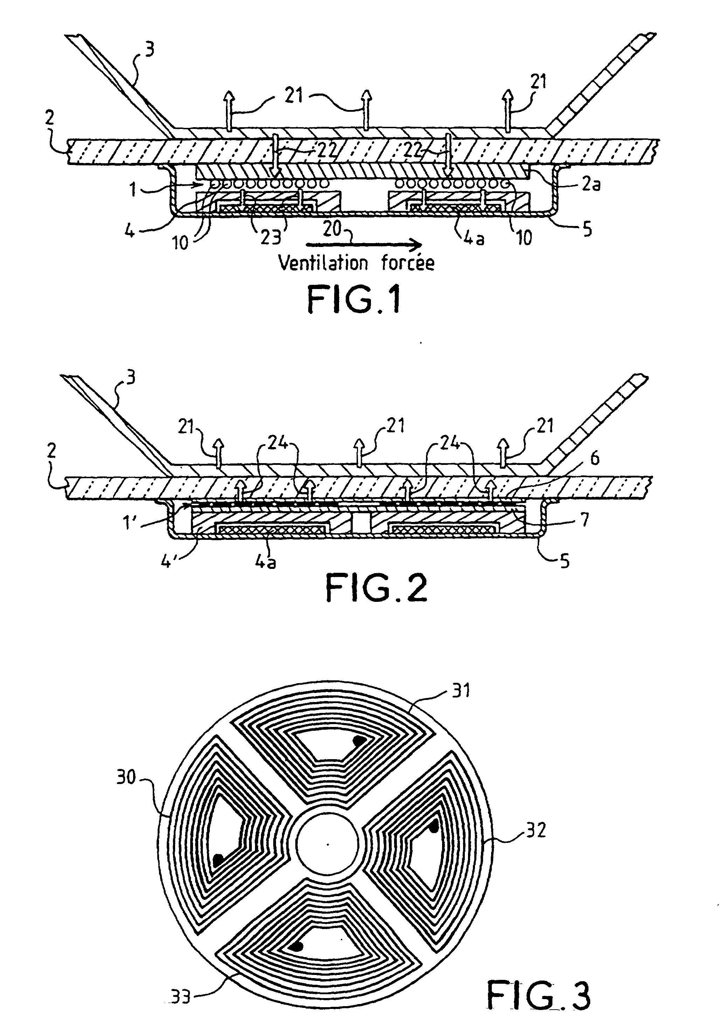

D'autres caractéristiques et avantages de l'invention ressortiront de la description ci-après d'un mode de réalisation donné à titre d'exemple. Cette description sera faite en regard du dessin dans lequel :
- une figure 1 représente, en coupe, la structure habituelle d'un foyer de cuisson par induction,
- une figure 2 représente, en coupe, la structure d'un foyer de cuisson par induction selon l'invention, et
- une figure 3 représente un exemple de motif, vu de face, dessiné par le ruban monoconducteur plat d'un bobinage inducteur d'un foyer de cuisson par induction selon l'invention.

Le foyer de cuisson par induction représenté à la figure 1 est de conception classique. Il comporte un bobinage inducteur 1 plat, placé sous une plaque 2, par exemple en vitrocéramique, destinée à recevoir un récipient à chauffer 3 dont les parois sont en un matériau ferritique.

Le bobinage inducteur plat 1 est constitué d'un enroulement à plat, en spirale, d'un toron multibrin de fils de cuivre revêtus individuellement d'une couche de verni électriquement isolant dont les différentes spires sont indexées par 10. Il est posé ou collé sur un support de bobinage 4 et séparé de la plaque 2 par une couche d'isolant thermique 2a qui peut être constituée d'une lame d'air, d'un papier céramique ou de laine de verre et qui le protège d'un échauffement par le récipient 3.

Le support 4 de bobinage est en un matériau thermiquement conducteur pour évacuer vers le bas les pertes caloriques du bobinage inducteur 1 et comporte, de manière connue, un matériau magnétique 4a, par exemple des barreaux de ferrite, disposé par en dessous, dont le rôle est de focaliser le champ magnétique engendré par le bobinage inducteur 1 vers le récipient à chauffer 3.

L'ensemble du bobinage inducteur 1 et de son support de bobinage 4 est placé sur un plateau 5 en matériau amagnétique, par exemple en aluminium, à rebord enveloppant, dont le rôle est de minimiser les champs magnétiques parasites du bobinage inducteur 1 en vue notamment, de protéger le générateur de courant haute fréquence placé en dessous qui alimente le bobinage inducteur 1.

Une ventilation forcée (flèche 20) est prévue en dessous du plateau 5 pour refroidir le bobinage inducteur 1 et son support 4.

Dans ce genre de foyer de cuisson par induction, on cherche à maintenir le bobinage inducteur 1 et son support 4 à une température compatible avec leurs constituants, inférieure en général à 220°C qui est la température maximale que supporte le verni électriquement isolant des brins de cuivre du toron du bobinage inducteur 1 et la matière plastique du support 4 de bobinage.

Les échanges thermiques se font dans deux directions opposées d'une part des parois du récipient 3 vers son contenu (flèches 21), ce qui est l'effet recherché, et d'autre part, des parois du récipient 3 vers le bobinage inducteur 1 au travers de la plaque support 2 en vitrocéramique et de l'isolant thermique 2a (flèches 22), ce qui est un effet indésirable, et, au travers du support 4 de bobinage, (flèches 23) du bobinage inducteur 1 vers le plateau 5 qui est refroidi par la ventilation forcée (flèche 20). Il y a une perte de rendement due aux calories évacuées par la ventilation forcée.

La figure 2 illustre une nouvelle structure de foyer de cuisson par induction dans laquelle cette perte de rendement est réduite en minimisant l'échange thermique entre le bobinage inducteur et le bas du foyer et en optimisant l'échange thermique entre le bobinage inducteur et le haut du foyer, vers le récipient à chauffer. Pour ce faire, on laisse chauffer le bobinage inducteur à une température supérieure à celle de la charge constituée par le récipient et l'on refroidit le bobinage inducteur par la charge. Ainsi, les calories dues aux pertes dans le bobinage inducteur participent au rendement du foyer. Le bobinage inducteur doit alors pouvoir atteindre des températures élevées de l'ordre de 400°C supérieures aux températures tolérées par les vernis électriquement isolants classiques. Aussi l'on a recours à un enroulement monoconducteur non isolé et dimensionné pour la haute fréquence donc de dimensions très réduites. Un autre avantage lié à la diminution du volume des conducteurs est une réduction importante de l'inertie thermique du système inducteur et donc une accélération du refroidissement en fin d'utilisation.

On distingue sur la figure 2 le récipient à chauffer 3 posé sur la plaque support en vitrocéramique 2.

Le bobinage inducteur 1', en forme de galette plate, d'une épaisseur typique de 500 µm, est plaqué sous la plaque support 2 en vitrocéramique par l'intermédiaire d'une feuille de mica 6 d'une épaisseur faible, de l'ordre de 200 µm, assurant l'isolation électrique secondaire par rapport à l'utilisateur, cela de manière à optimiser le transfert thermique vers la charge. Il peut être posé sur une seconde feuille de mica 7 plus épaisse et sur un support 4' de bobinage thermiquement isolant de forte épaisseur (4 à 8 mm) qui empêche la chaleur de se propager vers le bas où se trouve en général le générateur du courant haute fréquence excitant le bobinage inducteur, ou alors directement sur le support 4' sans l'intermédiaire de la seconde feuille de mica, cette option dépendant du mode de réalisation de l'inducteur.

Comme précédemment, le support 4' de bobinage est équipé d'un matériau magnétique 4a, par exemple des barreaux de ferrite ou encore un matériau plastoferrite, disposé par en dessous, pour focaliser le champ magnétique engendré par le bobinage inducteur 1' vers le récipient 3 à chauffer et l'ensemble du bobinage inducteur 1' et de son support 4' est placé sur un plateau 5 à rebord enveloppant, en un matériau amagnétique, par exemple de l'aluminium, minimisant les champs magnétiques parasites engendrés par le bobinage inducteur 1'.

Les échanges thermiques se font essentiellement en direction du récipient à chauffer et de son contenu (flèches 21 et 24) puisque le bobinage inducteur 1' a une température de fonctionnement supérieure à celle des parois du récipient 3 avec lequel il est en contact thermique par l'intermédiaire de la plaque support en vitrocéramique 2 et de la mince feuille de mica 6, et que le support de bobinage 4' constitue une barrière thermique s'opposant à la propagation de la chaleur vers le dessous du foyer.

La nécessité d'une ventilation forcée de la surface inférieure du foyer disparaît.

L'admission d'une plus forte température de fonctionnement pour le bobinage inducteur, de l'ordre de 400°C au lieu des 220°C habituels permet de tolérer des pertes nettement plus importantes et par conséquent des densités de courant plus fortes, de l'ordre de 30 A/mm² au lieu de 8 A/mm². Cela se traduit par une très forte réduction de la section du monoconducteur constituant le bobinage inducteur et par conséquent par une économie de matière entraînant une réduction significative du prix du bobinage inducteur. La suppression de la ventilation du système inducteur permet de même de réduire significativement le coût de l'ensemble.

Le bobinage inducteur peut être réalisé de différentes manières, soit en enroulant à plat un ruban conducteur monobrin de façon à former une spirale, soit en découpant ce même conducteur dans une tôle de matériau amagnétique et conducteur de l'électricité comme le cuivre ou l'aluminium.

Dans le cas d'une découpe qui peut se faire par un procédé mécanique ou chimique, la pièce obtenue est difficilement manipulable puisqu'elle a un diamètre typique de 190 mm pour une épaisseur de 500 µm, le nombre de spires correspondant à environ 10 m de fil enroulé. il est alors avantageux de réaliser un sandwich avec les deux feuilles d'isolation électrique résistantes à la chaleur 6 et 7 plaquées de part et d'autre. Pour ce faire, la spirale conductrice découpée est préalablement enduite d'une pâte électriquement isolante, résistant à la chaleur, afin de remplir les interspires, puis intercalée entre les deux feuilles d'isolation électrique résistant à la chaleur qui peuvent être des feuilles de mica, pressée et cuite afin de former avec les feuilles d'isolant électrique un ensemble compact aisément manipulable. Après cuisson, la pâte électriquement isolante remplissant les interspires sert d'isolation électrique entre les différentes spires du bobinage inducteur. Cette isolation électrique entre deux spires voisines est rendue nécessaire en raison des déplacements du ruban conducteur constituant la spirale dus à sa dilatation au cours des cycles de température. Ce phénomène est d'ailleurs relativement contraignant car il impose de ne pas dépasser certaines températures de fonctionnement bien que le ruban conducteur et les feuilles de mica assurant l'isolation électrique des faces supérieure et inférieure du bobinage inducteur puissent parfaitement les supporter. Il est alors nécessaire de détecter ces températures et de limiter le courant d'excitation du bobinage inducteur pour éviter leur dépassement. La détection de température peut se faire à l'aide des dispositifs classiques connus. il est cependant possible de limiter les déplacements entre spires voisines du ruban conducteur lors des cycles de température en jouant sur la géométrie du bobinage. On peut en effet réaliser un bobinage inducteur par une combinaison série, parallèle ou même série-parallèle de plusieurs petites bobines de forme ronde ou autre réparties à la surface du foyer de manière à minimiser les déplacements interspires du ruban monoconducteur par réduction de la longueur unitaire de chaque bobine élémentaire. L'intérêt d'une découpe est aussi de permettre de réaliser des formes géométriques complexes de bobinage qui ne peuvent pas être obtenues par enroulement. On peut ainsi envisager de découper simultanément, par exemple, la spirale inducteur et des contre-spires permettant de réduire les perturbations rayonnées.

La figure 3 représente une forme de bobinage particulier dans laquelle le ruban monoconducteur disposé à plat, forme quatre enroulements élémentaires en spirale 30, 31, 32 et 33 occupant quatre secteurs circulaires se partageant la surface du foyer. Ainsi, chaque enroulement élémentaire a une longueur unitaire quatre fois moindre que le bobinage total ce qui fait qu'il est le siège, au cours des cycles de températures, de phénomènes de déplacement entre spires voisines beaucoup plus réduits que si l'on était en présence d'un unique enroulement. Pour réduire les interconnexions extérieures au plan de la galette du bobinage inducteur, les enroulements élémentaires sont mis en série deux à deux par leurs spires extérieures., soit au centre du foyer comme représenté, soit à la périphérie du foyer. on remarque en outre que les enroulements élémentaires peuvent avoir des sens d'enroulement différents comme cela est représenté pour les enroulements élémentaires 30 et 31 ou 32 et 33, ou avoir les mêmes sens d'enroulement.

Un intérêt non négligeable de la nouvelle structure de foyer de cuisson par induction qui vient d'être décrite est de rapprocher le bobinage inducteur de sa charge constituée par le récipient à chauffer par suppression de l'écran thermique habituellement utilisé entre le bobinage inducteur et la charge. On augmente de ce fait la résistance ramenée en haute fréquence par la charge sur le bobinage inducteur ce qui entraîne une réduction des ampères-tours dans le bobinage inducteur et de la quantité de matière conductrice à employer. On minimise aussi de ce fait les fuites magnétiques et donc les perturbations électromagnétiques engendrées par le dispositif. Ce dispositif nécessite une limitation de la puissance pour les récipients de petits diamètres et plus généralement pour les récipients dont le diamètre est inférieur au diamètre de la bobine. Cette réduction de puissance est naturelle et logique dans une grande majorité de dispositifs de chauffage par induction. Elle est importante dans ce dispositif car si le bobinage se refroidit par la charge, il faut qu'il y ait une charge en regard des spires à refroidir d'où la nécessité de diminuer la puissance donc la température en présence d'une charge de petit diamètre, car les spires non recouvertes ont alors plus de difficulté à se refroidir. On peut aussi avantageusement lier ce concept à un concept d'inducteur autoadaptatif à la charge (brevets : français 2 672 763 du 7 mai 93, brevet Européen 0498735 du 24 août 94 et demande de brevet français 94 14818 du 9 décembre 94), ce dernier concept étant très facilement applicable à cette technologie.

## Revendications

1. Foyer de cuisson par induction comportant une plaque supérieure (2) en un matériau céramique destiné à recevoir un récipient (3) à chauffer en matériau ferritique, un bobinage inducteur monoconducteur (1') disposé sous la plaque supérieure (2) sur un support de bobinage (4') et excité par un générateur de courant haute fréquence, **caractérisé en ce que** le bobinage inducteur monoconducteur (1') est constitué d'un ruban conducteur plat enroulé à plat en spirale, séparé de la plaque supérieure par une feuille thermiquement conductrice (6) constituée d'un isolant électrique résistant à la chaleur et séparé de son support (4') par une deuxième feuille (7) constituée d'un isolant électrique résistant à la chaleur.

2. Foyer selon la revendication 1, **caractérisé en ce que** ladite deuxième feuille (7) est thermiquement isolante.

3. Foyer selon la revendication 1, **caractérisé en ce que** le ruban conducteur plat du bobinage inducteur (1') est en cuivre avec une section correspondant à une densité de courant très élevée de l'ordre de 30 A/mm².

4. Foyer selon la revendication 1, **caractérisé en ce que** le ruban conducteur plat du bobinage inducteur (1') est en aluminium.

5. Foyer selon la revendication 1, **caractérisé en ce que** le bobinage inducteur (1') est obtenu par enroulement à plat en spirale d'un ruban monoconducteur plat.

6. Foyer selon la revendication 1, **caractérisé en ce que** le bobinage inducteur (1') est obtenu par découpage d'un ruban monoconducteur plat en spirale dans une tôle en un matériau amagnétique et conducteur de l'électricité.

7. Foyer selon la revendication 2, **caractérisé en ce que** le bobinage inducteur (1') forme un ensemble compact aisément manipulable avec les feuilles d'isolant électrique (6, 7) entre lesquelles il est inséré.

8. Foyer selon la revendication 7, **caractérisé en ce que** le bobinage inducteur (1') est enduit d'une pâte électriquement isolante, résistante à la chaleur avant d'être inséré entre les deux feuilles d'isolant électrique (6, 7), pressé entre elles et cuit pour constituer avec elles un stratifié.

9. Foyer selon la revendication 1, **caractérisé en ce que** le bobinage inducteur (1') est constitué d'une combinaison série, parallèle ou série parallèle de plusieurs bobines plates (30, 31, 32 et 33) de longueurs unitaires réduites, réparties à la surface du foyer.

10. Foyer selon la revendication 9, **caractérisé en ce que** lesdites bobines plates (30, 31 ou 32, 33) sont mises en série deux par deux par leurs spires extérieures.

11. Foyer selon la revendication 1, **caractérisé en ce que** la feuille thermiquement conductrice (6) d'isolant électrique intercalée entre le bobinage inducteur (1') et la plaque supérieure (2) est une mince feuille de mica.

12. Foyer selon la revendication 2, **caractérisé en ce que** la feuille thermiquement isolante (7) d'isolant électrique intercalée entre le bobinage inducteur (1') et son support (4') est une épaisse feuille de mica.

13. Foyer selon la revendication 1, **caractérisé en ce que** ledit support (4') du bobinage inducteur (1') est en un matériau à base de fibres de verre.

14. Foyer selon la revendication 1, **caractérisé en ce qu'**il est équipé d'un dispositif de limitation de puissance en fonction de sa charge.

## Patentansprüche

1. Induktionskochstelle mit einer oberen Platte (2) aus einem keramischen Material, die dazu bestimmt ist, einen zu erwärmenden Behälter (3) aus ferritischem Material aufzunehmen, einer Monoleiter-Induktionswicklung (1'), welche unter der oberen Platte (2) auf einem Wicklungsträger (4') angeordnet ist und durch einen Hochfrequenzstromgenerator erregt wird, **dadurch gekennzeichnet, dass** die Monoleiter-Induktionswicklung (1') aus einem flach und spiralförmig gewickelten, flachen Bandleiter besteht, durch eine thermisch leitende Folie (6), die aus einem wärmebeständigen, elektrischen Isolator besteht, von der oberen Platte getrennt ist und durch eine zweite Folie (7), die aus einem wärmebeständigen, elektrischen Isolator besteht, von ihrem Träger (4') getrennt ist.

2. Kochstelle nach Anspruch 1, **dadurch gekennzeichnet, dass** die zweite Folie (7) thermisch isolierend ist.

3. Kochstelle nach Anspruch 1, **dadurch gekennzeichnet, dass** der flache Bandleiter der Induktionswicklung (1') aus Kupfer ist und einen Querschnitt aufweist, welcher einer sehr hohen Stromdichte von 30A/mm² entspricht.

4. Kochstelle nach Anspruch 1, **dadurch gekennzeichnet, dass** der flache Bandleiter der Induktionswicklung (1') aus Aluminium ist.

5. Kochstelle nach Anspruch 1, **dadurch gekennzeichnet, dass** die Induktionswicklung (1') durch flaches, spiralförmiges Wickeln eines flachen Monoleiter-Bandes erhalten wird.

6. Kochstelle nach Anspruch 1, **dadurch gekennzeichnet, dass** die Induktionswicklung (1') durch Ausschneiden eines flachen, spiralförmigen Monoleiter-Bandes aus einem Blech erhalten wird, welches aus nichtmagnetischem und elektrisch leitendem Material besteht.

7. Kochstelle nach Anspruch 2, **dadurch gekennzeichnet, dass** die Induktionswicklung (1') mit den Folien (6, 7), die aus dem elektrischen Isolator bestehen und zwischen denen die Wicklung eingefügt ist, eine kompakte, leicht handhabbare Baugruppe bildet.

8. Kochstelle nach Anspruch 7, **dadurch gekennzeichnet, dass** die Induktionswicklung (1') mit einer elektrisch isolierenden, wärmebeständigen Paste bestrichen wird, bevor sie zwischen die beiden Folien (6, 7) aus dem elektrischen Isolator eingefügt, zwischen diesen gepresst und gebacken wird, um mit ihnen einen Schichtaufbau zu bilden.

9. Kochstelle nach Anspruch 1, **dadurch gekennzeichnet, dass** die Induktionswicklung (1') aus einer Kombination von mehreren flachen Spulen (30, 31, 32 und 33) mit verminderten Einheitslängen besteht, welche an der Oberfläche der Kochstelle verteilt sind und in Reihe, parallel oder in Reihe und parallel geschaltet sind.

10. Kochstelle nach Anspruch 9, **dadurch gekennzeichnet, dass** die flachen Spulen (30, 31 oder 32, 33) durch ihre Außenwindungen paarweise in Reihe geschaltet sind.

11. Kochstelle nach Anspruch 1, **dadurch gekennzeichnet, dass** die thermisch leitende Folie (6) aus dem elektrischen Isolator, die zwischen der Induktionswicklung (1') und der oberen Platte (2) eingesetzt ist, eine dünne Glimmerfolie ist.

12. Kochstelle nach Anspruch 2, **dadurch gekennzeichnet, dass** die thermisch leitende Folie (7) aus dem elektrischen Isolator, die zwischen der Induktionswicklung (1') und ihrem Träger (4') eingesetzt ist, eine dicke Glimmerfolie ist.

13. Kochstelle nach Anspruch 1, **dadurch gekennzeichnet, dass** der Träger (4') der Induktionswicklung (1') aus einem Material aus Glasfasern besteht.

14. Kochstelle nach Anspruch 1, **dadurch gekennzeichnet, dass** sie mit einer Vorrichtung zur Begrenzung der Leistung in Abhängigkeit von ihrer Last ausgestattet ist.

## Claims

1. Induction hob comprising an upper plate (2) made from a ceramic material intended to receive a receptacle (3) to be heated made from a ferritic material, a single-conductor inductive winding (1') disposed under the upper plate (2) on a winding support (4') and energised by a high-frequency current generator, **characterised in that** the single-conductor inductive winding (1') consists of a flat conductive ribbon wound flat in a spiral, separated from the upper plate by a thermally conductive sheet (6) consisting of a heat-resistant electrical insulator and separated from its support (4') by a second sheet (7) consisting of a heat-resistant electrical insulator.

2. Hob according to Claim 1, **characterised in that** said second sheet (7) is thermally insulating.

3. Hob according to Claim 1, **characterised in that** the flat conductive ribbon of the inductive winding (1') is made from copper with a cross-section corresponding to a very high current density of approximately 30 A/mm².

4. Hob according to Claim 1, **characterised in that** the flat conductive ribbon of the inductive winding (1') is made from aluminium.

5. Hob according to Claim 1, **characterised in that** the inductive winding (1') is obtained by winding a flat single-conductor ribbon flat in a spiral.

6. Hob according to Claim 1, **characterised in that** the inductive winding (1') is obtained by cutting a spiral-shaped flat single-conductor ribbon from a metal sheet made from a non-magnetic and electrically conductive material.

7. Hob according to Claim 2, **characterised in that** the inductive winding (1') forms an easily handleable compact assembly with the sheets of electrical insulator (6, 7) between which it is inserted.

8. Hob according to Claim 7, **characterised in that** the inductive winding (1') is coated with a heat-resistant electrically insulating paste before being inserted between the two sheets of electrical insulator (6, 7), pressed between them and baked in order to constitute a laminate therewith.

9. Hob according to Claim 1, **characterised in that** the inductive winding (1') consists of a series, parallel or series-parallel combination of several flat coils (30, 31, 32 and 33) of reduced unit lengths, distributed on the surface of the hob.

10. Hob according to Claim 9, **characterised in that** said flat coils (30, 31 or 32, 33) are connected in series in pairs by their outer turns.

11. Hob according to Claim 1, **characterised in that** the thermally conductive sheet (6) of electrical insulator inserted between the inductive winding (1') and the upper plate (2) is a thin sheet of mica.

12. Hob according to Claim 2, **characterised in that** the thermally insulating sheet (7) of electrical insulator inserted between the inductive winding (1') and its support (4') is a thick sheet of mica.

13. Hob according to Claim 1, **characterised in that** said support (4') of the inductive winding (1') is made from a material based on glass fibres.

14. Hob according to Claim 1, **characterised in that** it is equipped with a device for limiting power according to its load.
